# EUROPÄISCHE PATENTSCHRIFT

(11) **EP 0 971 807 B1**
(45) Veröffentlichungstag und Bekanntmachung des Hinweises auf die Patenterteilung: **22.10.2003**
(21) Anmeldenummer: 97915434.1
(22) Anmeldetag: 25.03.1997
(51) Int. Cl.: B23B 51/02

(54) **BOHRWERKZEUG**
BORING BIT
OUTIL DE PERCAGE

(43) Veröffentlichungstag der Anmeldung: 19.01.2000
(73) Patentinhaber: GÜHRING, Jörg, Dr., 72458 Albstadt (DE)
(72) Erfinder: CSELLE, Tibor, D-72488 Sigmaringen (DE)
(74) Vertreter: Winter, Brandl & Partner
(86) Internationale Anmeldenummer: EP9701520
(87) Internationale Veröffentlichungsnummer: WO98042469

(56) Entgegenhaltungen:
- GB-A- 2 002 661
- US-A- 5 094 572

## Beschreibung

Die Erfindung betrifft ein Bohrwerkzeug, insbesondere ein mehrschneidiges Bohrwerkzeug beispielsweise mit punktsymmetrischer Schneidenanordnung mit Haupt- und Nebenschneide, gemäß dem Oberbegriff des Patentanspruchs 1. Die Erfindung erfaßt dabei unterschiedlichste Arten von Bohrwerkzeugen, wie z. B. Bohrwerkzeuge zum Bohren ins Volle, Aufbohrwerkzeuge und, aber auch Tieflochbohrer.

Bohrwerkzeuge werden heutzutage immer noch überwiegend als Spiralbohrer bzw. Wendelbohrwerkzeuge ausgeführt, d. h. als Bohrwerkzeuge mit wendelförmigen Spannuten. Die Ersteigungswinkel der Bohrerwendel und damit der Seitenspanwinkel des Bohrers liegt dabei in der Regel zwischen 0° und 50°, d. h. im positiven Bereich. Es wird anhand der Fig. 8 näher erläutert:

Man erkennt den Spiralbohrer 10 mit einem Schaft 12 und einem Schneidteil 14, in das wendelförmige Spannuten 16 eingearbeitet sind. Der Seitenspanwinkel ist mit γ bezeichnet. Dieser Seitenspanwinkel γ ist positiv, weil er sich entgegen der Drehrichtung ω öffnet.

Positive Seitenspanwinkel sind in erster Linie deshalb vorgesehen, weil sich damit bei hoher Stabilität des Bohrers verhältnismäßig günstige Schnittbedingungen im Bereich der Nebenschneide erzielen lassen, aber auch deshalb, damit die Späne zuverlässig aus dem Bohrloch heraus transportiert werden können.

Bei innengekühlten Bohrwerkzeugen und insbesondere bei Bohrwerkzeugen, bei denen die Kühlmittelversorgung unter sehr hohen Druck hin erfolgt, gelingt es, das Kühlund Schmiermittel zum Abtransport der Späne aus dem Bohrloch zu nutzen. Man ist deshalb bei kurzspanenden Werkzeugen bereits dazu übergegangen, geradegenutete Werkzeuge zu verwenden, da man hier die im Vergleich zum Wendelbohrer höhere Torsionsfestigkeit des geradegenuteten Werkzeugs ausnutzen kann. Allerdings bleibt die Verwendung derartiger Werkzeuge bislang für sehr kurzspanende Werkzeuge wie Guß oder AlSi-Legierungen beschränkt.

Intensive Untersuchungen mit herkömmlich gestalteten bzw. genuteten Bohrwerkzeugen zeigen, daß es insbesondere bei schlanken Werkzeugen, d. h. bei Werkzeugen mit einem Verhältnis von Schneidteillänge zu Durchmesser im Bereich über 5 auf Schwierigkeiten stößt, das Werkzeug in radialer Richtung zu stabilisieren. Durch moderne Anschliffe, die häufig unter Zuhilfenahme von CNC-gesteuerten Werkzeugmaschinen angebracht werden, gelingt es zwar diese Schwingungen einzuschränken. Allerdings zeigt sich, daß schon geringfügige, asymmetrische Abnutzungserscheinungen die radiale Stabilität des Bohrwerkzeugs stark beeinträchtigen, was sich bereits nach kurzer Standzeit negativ auf die Qualität der Bohrung auswirken kann. Hier ist nicht nur die Maßhaltigkeit der Bohrung, sondern auch die Oberflächenqualität zu beachten. Dieser Einfluß wirkt sich besonders stark bei Werkzeugen aus, bei denen ein Bohrwerkzeug-Trägerteil aus Stahl oder Schnellstahl mit einem verschleißfesteren Schneidstoff, wie z. B. Hartmetal oder einem Cermet bestückt ist.

Aus dem US Patent Nr. 5,094,572 ist ein Bohrwerkzeug mit einem negativen Seitenspanwinkel bekannt; jedoch weist dieses Bohrwerkzeug keine wendelförmige Spannut auf.

Des Weiteren offenbart die europäische Patentanmeldung Nr. EP 0 749 794 A1 ein Bohrwerkzeug mit einem Bohrerschaft, der einen sich axial entlang des Bohrerschaftes erstreckenden Innenspanraum und Außenspanraum. Zur Schwingungsberuhigung und Erhöhung der Schneidleistung hat der Bohrerschaft einen Linksdrall. In den Spanräumen sind jeweils wenigstens eine in Axialrichtung orientierte Wendeschneidplatte angeordnet. Jede Wendeschneidplatte definiert eine Hauptschneide gebildet aus zwei gleich langen Schneidkanten, die einander unter einem stumpfen Winkel schneiden. Jedoch weisen die Wendeschneidplatten keine durch den Verlauf der Spannut gebildete Nebenschneide auf.

Ausgehend von einem handelsüblichen Wendelbohrer gemäß dem Oberbegriff des Patentanspruchs 1 liegt der Erfindung die Aufgabe zugrunde, ein Bohrwerkzeug zu schaffen, mit dem selbst in instabilen Verhältnissen ruhig und schwingungsarm gebohrt werden kann, so daß Bohrungen mit guter Oberflächen- und Maßgenauigkeit erzeugt werden können.

Diese Aufgabe wird durch eine Bohrwerkzeug gemäß den Merkmalen des Patentanspruchs 1 gelöst.

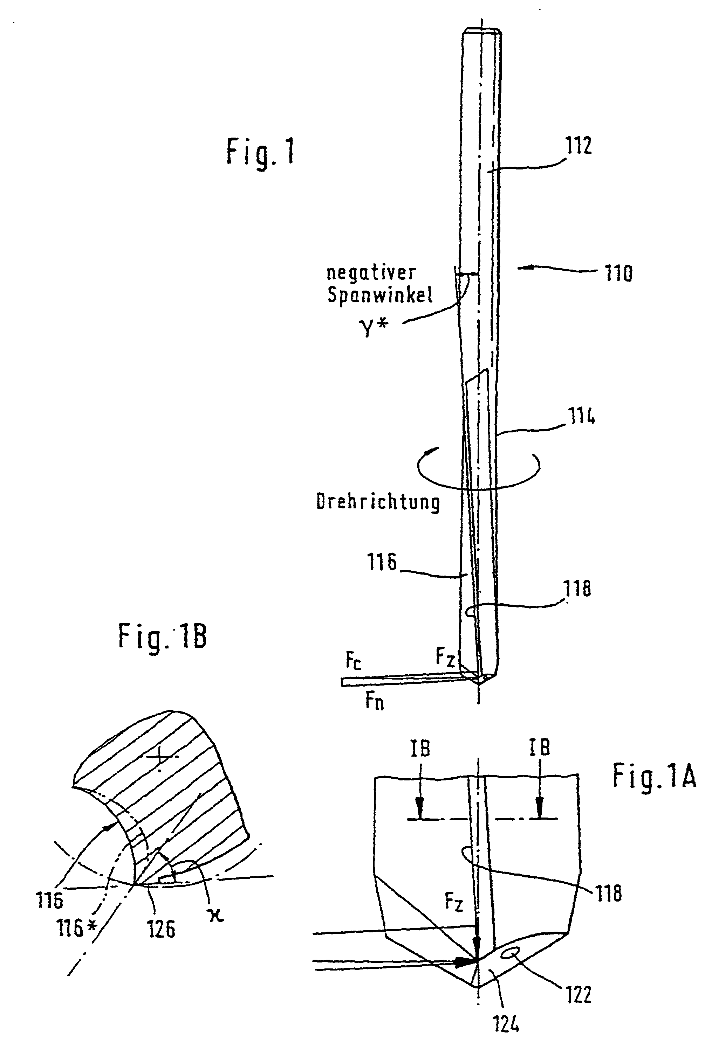

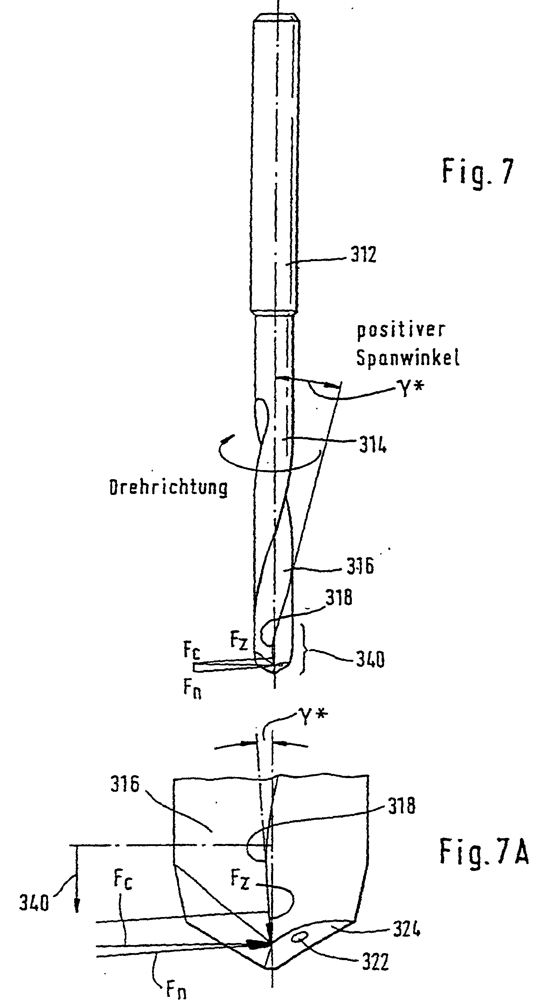

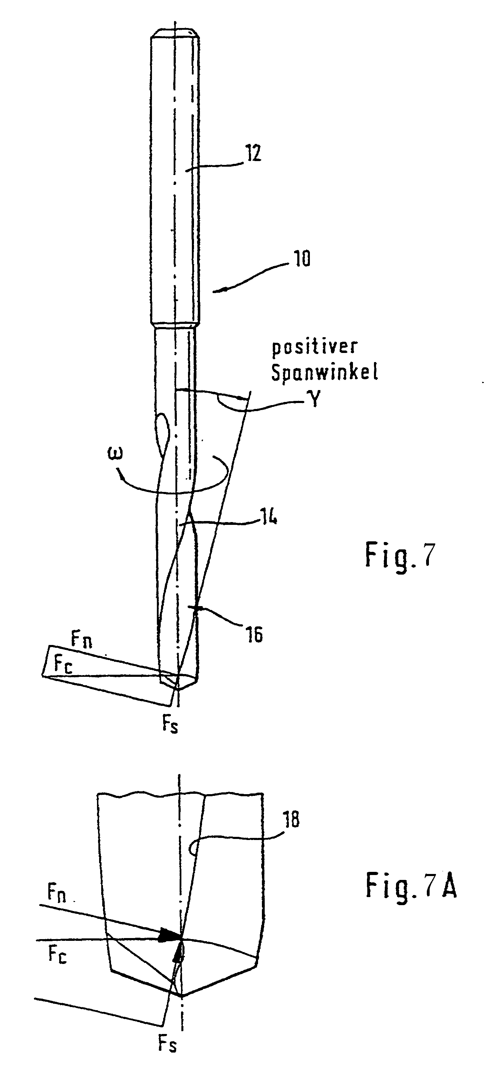

Erfindungsgemäß wird der Verlauf der Nebenschneide zur Stabilisierung des Werkzeugs genutzt. Der erfindungsgemäße Effekt kann dabei anhand des Vergleichs der Figuren 7 und 1 am besten veranschaulicht werden:

In Fig. 7 ist die Schnittkraft Fc eingetragen, die in Schnittrichtung weist. Diese Schnittkraft F_{c} stellt die resultierende Kraft aus der auf der Schneide senkrecht stehenden Normalkraft Fₙ und der Schnittkraftkomponenten Fₛ dar. Fig. 7 bzw. Fig. 7A, die in vergrößertem Maßstab die Kraftverhältnisse an der Schneidenecke wiedergibt, läßt somit erkennen, daß die Kraftkomponente Fₛ den Spiralteil bzw. den Schneidteil des Bohrwerkzeugs 10 auf Druck beansprucht. Mit anderen Worten, die Kraftkomponente Fₛ unterwirft den verhältnismäßig schlanken Bohrerkörper einer Knickbeanspruchung, so daß für das Bohrwerkzeug bzw. für das Schneidteil hochfeste Werkzeuge, wie z. B. Schnellstahl oder Hartmetal verwendet werden müssen.

Im Vergleich zu herkömmlichen Bohrwerkzeugen gemäß Fig. 7 und 7A ist bei dem erfindungsgemäßen Bohrwerkzeug, wie es in Figs. 1, 1A und 1B gezeigt ist, die Anordnung so getroffen, daß die Nebenschneide 118 über eine überwiegende axiale wirksame Länge in Drehrichtung, d. h. in Schnittrichtung, geneigt ist und damit einen negativen Seitenspanwinkel γ* hat. Die Zerlegung der Schnittkraft F_{c} in die Normalkraftkomponente Fₙ und eine darauf senkrecht stehende Komponente F_{z} ergibt, daß die Kraftkomponente F_{z} - wie aus Fig. 1A ersichtlich - das Bohrwerkzeug bzw. das Schneidteil 114 auf Zug beansprucht. Diese Zugkraft F_{z} wirkt sich stabilisierend auf den Bohrwerkzeugkörper aus, mit dem Effekt, daß selbst bei sehr schlanker Ausgestaltung des Bohrwerkzeugs ein Ausknicken erst bei wesentlich größeren seitlichen Kräften auftreten kann, als es bei herkömmlicher Gestaltung der Bohrwerkzeuge der Fall ist. Die Zugkraft F_{z} wirkt somit als Vorspannung auf das Schneidteil und erhöht auf diese Weise die dynamische Stabilität des Bohrwerkzeugs. Es konnte in Versuchen nachgewiesen werden, daß das erfindungsgemäße Bohrwerkzeug selbst bei instabilen Verhältnissen wesentlich ruhiger und schwingungsärmer bohrt als herkömmliche Bohrwerkzeuge, so daß Bohrungen mit besserer Oberflächen- und Maßgenauigkeit hergestellt werden konnten.

Wesentlich für den Erfindungsgegenstand ist somit, daß der Verlauf der Nebenschneide zur Stabilisierung des Bohrwerkzeugs gegen Seitenkräfte herangezogen wird. Dabei hat es sich herausgestellt, daß es nicht unbedingt erforderlich ist, die gesamte Nebenschneide mit einem negativen Seitenspanwinkel auszubilden. Es genügt vielmehr die Nebenschneide über eine überwiegende axiale wirksame Länge in Schnittrichtung zu neigen, um in der Summe der auftretenden dynamischen Kräfte die vorstehend erläuterte Stabilisierung des Werkzeugs zu erzielen.

Vorteilhafte Weiterbildungen der Erfindung sind Gegenstand der Unteransprüche.

Der Seitenspanwinkel wird vorteilhafterweise auf den Keilwinkel der Nebenschneide abgestimmt. Damit gelingt es, die Spanbildung zu verbessern, und zwar selbst für den Fall, daß ein verhältnismäßig großer negativer Seitenspanwinkel zum Einsatz kommt.

Das erfindungsgemäße Prinzip läßt sich auf unterschiedlichste Bohrwerkzeuge übertragen, auch für Ein-Lippen-Bohrwerkzeuge. Bei Tieflochbohrwerkzeugen kommt das erfindungsgemäße Prinzip besonders wirksam zum Tragen, da diese Werkzeuge einen sehr hohen Schlankheitsgrad haben und somit auf Pflichtbeanspruchungen besonders empfindlich reagieren.

Ein weiteres besonders günstiges Anwendungsgebiet stellen Bohrwerkzeuge dar, bei denen die Schneidenanordnung auf einem Schneidteil ausgebildet ist, und das Schneidteil auf einem Trägerteil sitzt. Eine solche Bohrwerkzeuggestaltung hat dann Vorteile, wenn teures hochfestes Material für das Trägerteil eingespart werden soll. Die erfindungsgemäße Gestaltung des Bohrwerkzeugs erlaubt es, die stabilisierende Wirkung der Nebenschneide zur Unterstützung des schwächeren Materials für das Trägerteil heranzuziehen.

Es hat sich gezeigt, daß für die gängigen Schneidteiimaterialien die erfindungsgemäße Gestaltung des Nebenschneidenverlaufs ohne weiteres anwendbar ist. Das erfindungsgemäße Konzept führt nicht zu einer Überbeanspruchung der Materialien und es stellt sich auf der anderen Seite eine wesentlich verbesserte Maßgenauigkeit und Öberflächengüte der Bohrung ein.

Die Weiterbildung der Patentansprüche 12 und 13 ergibt eine sehr einfache Gestaltung des Werkzeugs, weil die Nebenschneide automatisch durch den Verlauf der Spannute vorgegeben ist. Es ist jedoch nicht unbedingt erforderlich, die Spannuten über die gesamte Länge des Schneidteils mit einer gleichmäßigen Wendelsteigung auszustatten. Vielmehr kann über die axiale Länge des Bohrwerkzeugs der Seitenspanwinkel variieren, solange die Bedingung des Patentanspruchs 1 erfüllt ist, daß die Nebenschneide über eine überwiegende axiale wirksame Länge in Schnittrichtung geneigt bleibt und in diesem Bereich einen negativen Seitenspanwinkel hat.

Von besonderem Vorteil ist die Weiterbildung des Patentanspruchs 15. Durch das innenliegende Kühlkanalsystem kann das unter verhältnismäßig hohem Druck zugeführte Kühl- und Schmiermittel dazu herangezogen werden, die Späne aus dem Bohrloch entgegen der negativen Förderwirkung der Negativ-Wendel (Negativ-Spirale) herauszufordern. Es hat sich gezeigt, daß es ohne weiteres genügt, bei einem negativen Seitenspanwinkel im Bereich zwischen -1°C und -10°C den Kühl- bzw. Schmiermitteldruck um etwa 20% gegenüber herkömmlichen Drücken anzuheben.

Mit der Weiterbildung des Anspruchs 19 kann die Nebenschneide zusätzlich entlastet werden, was zur Verbesserung der Oberflächengüte der Bohrung genutzt werden kann.

Die erfindungsgemäße, stabilisierende Wirkung der Bohrergestaltung wirkt sich besonders positiv dann aus, wenn das Werkzeug als drehangetriebenes Werkzeug eingesetzt und gestaltet wird.

Die Erfindung wird nachstehend anhand schematischer Zeichnungen näher erläutert. Es zeigen:
Fig. 1 eine Seitenansicht des erfindungsgemäßen Werkzeugs;
Fig. 1A die Einzelheit IA gemäß Fig. 1;
Fig. 1B den Teilschnitt IB-IB gemäß Fig. 1A;
Fig. 2A eine Meßkurve der radialen Schwingkraft über der Bohrtiefe bei Verwendung eines herkömmlichen Bohrwerkzeugs;
Fig. 2B eine der Fig. 2A entsprechende Darstellung der Meßkurve für ein Werkzeug mit erfindungsgemäßer Gestaltung;
Fig. 3A eine Meßkurve der Vorschubkraft über dem Bohrweg für ein herkömmliches Werkzeug;
Fig. 3B eine der Fig. 3A entsprechende Darstellung der Meßkurve für ein erfindungsgemäßes Werkzeug;
Fig. 4A und Fig. 4B Meßkurven zur Darstellung der unterschiedlichen Rauhigkeiten von Bohrungen, wie sie mit einem herkömmlichen Bohrwerkzeug (Fig. 4A) und einem erfindungsgemäßen Bohrwerkzeug (Fig. 4B) erzielbar sind; und
Fig. 5A und Fig. 5B Meßkurven zur Darstellung der erzielbaren Welligkeiten am Bohrungsgrund, wobei in der Fig. 5A das Meßergebnis für ein herkömmliches Bohrwerkzeug und mit der Fig. 5B das Meßergebnis für ein erfindungsgemäßes Werkzeug dargestellt ist;
Fig. 6 und 6A eutsprechend der Darstellung gemäß Fig. 1 bzw. 1A eine Variante des erfindungsgemaßen Bohrwerkzeugs, bei dem der negative Spanwinkel lediglich in einem Spitzenabschnitt vorliegt; und
Fig. 8 und 8A Ansichten entsprechend den Fig. 1 und 1A eines herkömmlich gestalteten Bohrwerkzeugs.

In Fig. 1 ist ein Bohrwerkzeug gezeigt, das als Vollbohrer ausgebildet ist, d. h. einen homogenen Körper aus ein und demselben Material hat. Als Material hierfür kann Schnellstahl, Hartmetal, ein keramischer Werkstoff oder ein Cermet Verwendung finden. Die mit 116 bezeichneten Spannuten werden von einer Nebenschneide 118 begrenzt, die über die gesamte Länge des Schneidteils einen gleichbleibenden negativen Seitenspanwinkel γ* hat. Es ist jedoch hervorzuheben, daß der erfindungsgemäße Effekt auch dann zuverlässig eintritt, wenn der negative Seitenspanwinkel nur bereichsweise, allerdings über eine überwiegende axiale wirksame Länge hinweg negativ eingestellt ist. Es genügt in diesem Zusammenhang, wenn das Werkzeug auf einer kurzen Strecke mit einem positiven Seitenspanwinkel ausgestattet wird, der dann in einen negativen Seitenspanwinkel übergeht.

Mit dem Bezugszeichen 122 ist eine Austrittsöffnung für einen innenliegenden Kühlkanal bezeichnet. Die Mündungsöffnung liegt in der Hauptfreifläche 124 des Bohrers 110, so daß die Spannut wirksam mit dem Kühl- bzw. Schmiermittel gespült werden kann. Es ist vorteilhaft, bei tieferen Bohrungen, d. h. bei Bohrungen mit einer Tiefe, die größer ist als zweimal der Bohrerdurchmesser, mit Kühl- bzw. Schmiermitteldrücken zu arbeiten, die ca. 20% über den herkömmlichen Drücken liegen.

In Fig. 1B ist ein Teilschnitt einer Schnittführung entlang der Linie IB-IB gezeigt. Man erkennt mit 116 den Verlauf der Spannut sowie die Phase 126. Mit strichpunktierter Linie ist ein hypotetischer Verlauf einer modifizierten Spannut 116* bezeichnet, durch deren Verlauf Einfluß auf den Keilwinkel κ im Bereich der Nebenschneide 118 genommen werden kann. Vorteilhafterweise wird dieser Keilwinkel κ so auf die Größe des negativen Seitenspanwinkels γ* abgestimmt, daß sich noch günstige Schnittverhältnisse einstellen. Selbstverständlich wird dieser Winkel in Abhängigkeit von dem zu zerspanenden Werkstoff gewählt.

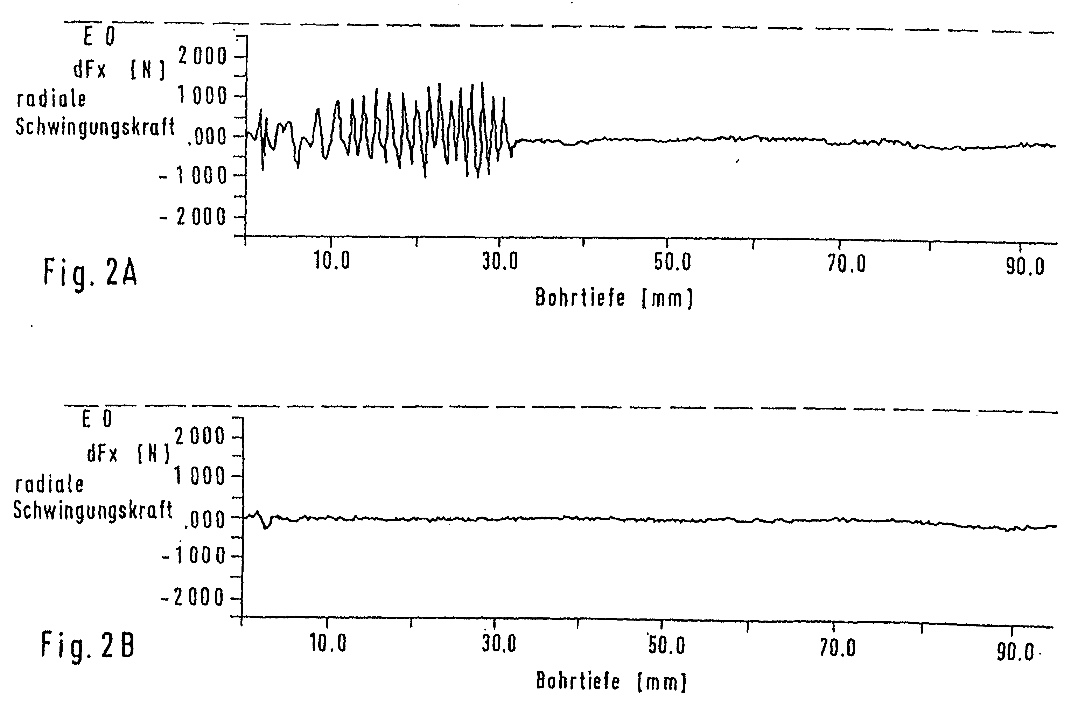

Im folgenden wird auf die Figs. 2 bis 5 Bezug genommen, die Ergebnisse von Versuchen erläutern, die mit herkömmlichen Bohrwerkzeugen und erfindungsgemäßen Werkzeugen durchgeführt wurden. Es wurde ein "Ratiobohrer" des Typs RT150 GG mit Kegeimantelanschliff und einem Durchmesser von B = 10 mm verwendet, wobei eine Bohrung hergestellt wurde, deren Tiefe dem zehnfachen des Bohrerdurchmessers entsprach. Es wurde mit einer Schnittgeschwindigkeit vc von 380 m/men gearbeitet und einem Vorschub f von 0.16 mm/Umdrehung. Der zu zerspanende Werkstoff war AlSi₉Cu₃. Der Vergleichsversuch fand mit einer negativen Steigung der Spiralwendel mit einem Winkel γ* von 4° statt. Die übrigen Parameter wurden beibehalten. Fig. 2 zeigt den Verlauf der radialen Schwingungskraft dFx über der Bohrtiefe. Man erkennt ein extrem starkes Schwingverhalten bis zu einer Bohrtiefe von 30 mm. Im Vergleich hierzu zeigt der Versuch mit dem erfindungsgemäßen Werkzeug eine äußerst geringe und gleichbleibende Schwingungsneigung.

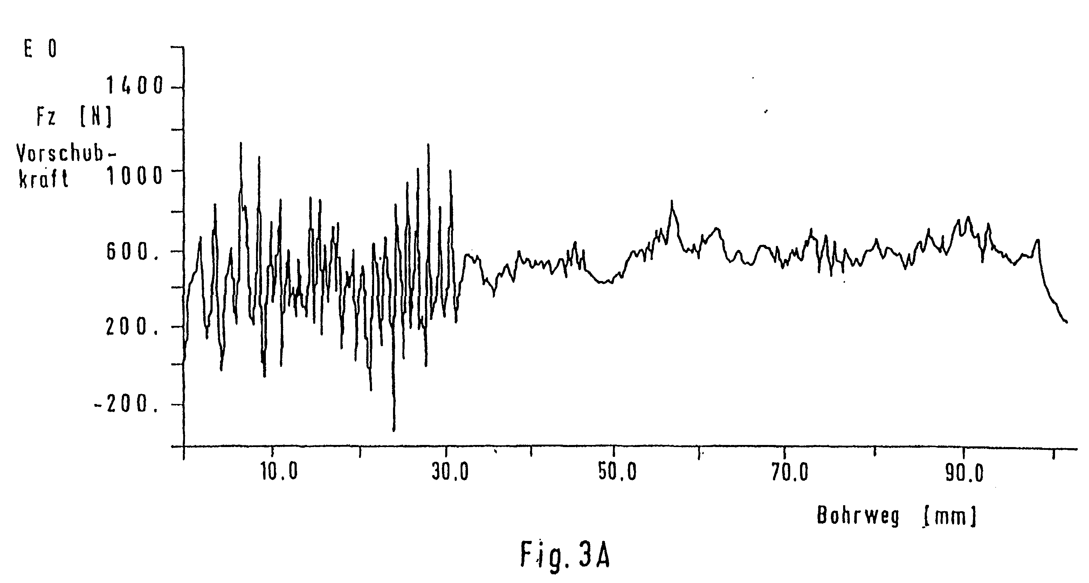

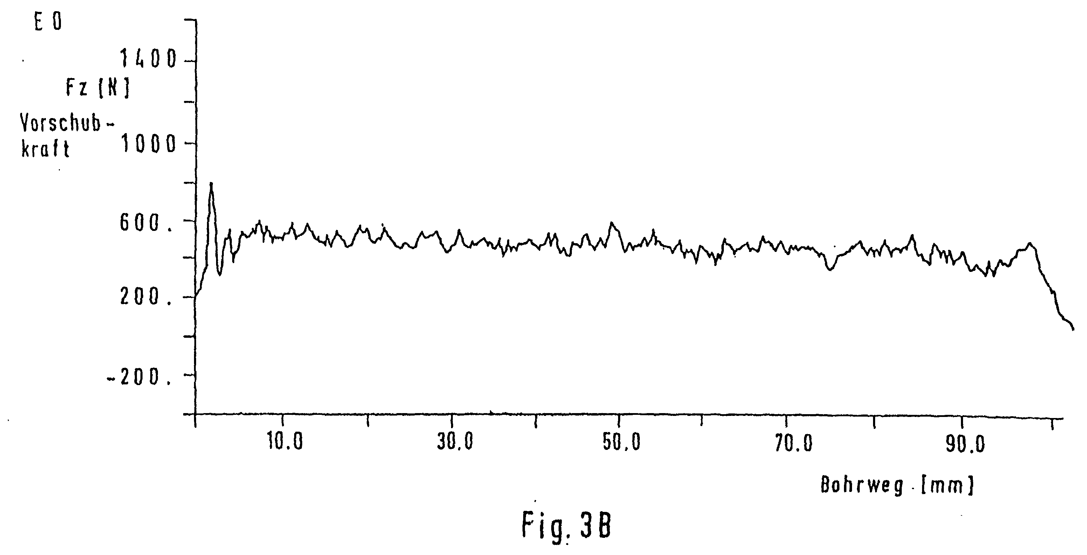

In den Figs. 3A und 3B ist der Verlauf der Vorschubkraft F_{z} über dem Bohrweg wiedergegeben. Auch hier zeigt sich die unruhige Kräfteverteilung bei Verwendung des herkömmlich gestalteten Bohrwerkzeugs, wobei die Schwankungen bis zu einem Bohrweg von 3 x d extrem stark sind. Demgegenüber zeigt Fig. 3B lediglich zu Beginn des Bohrwerkzeugs kleinere Ausschläge der Vorschubkraft und nach kurzem Bohrweg eine sehr gute Stabilisierung.

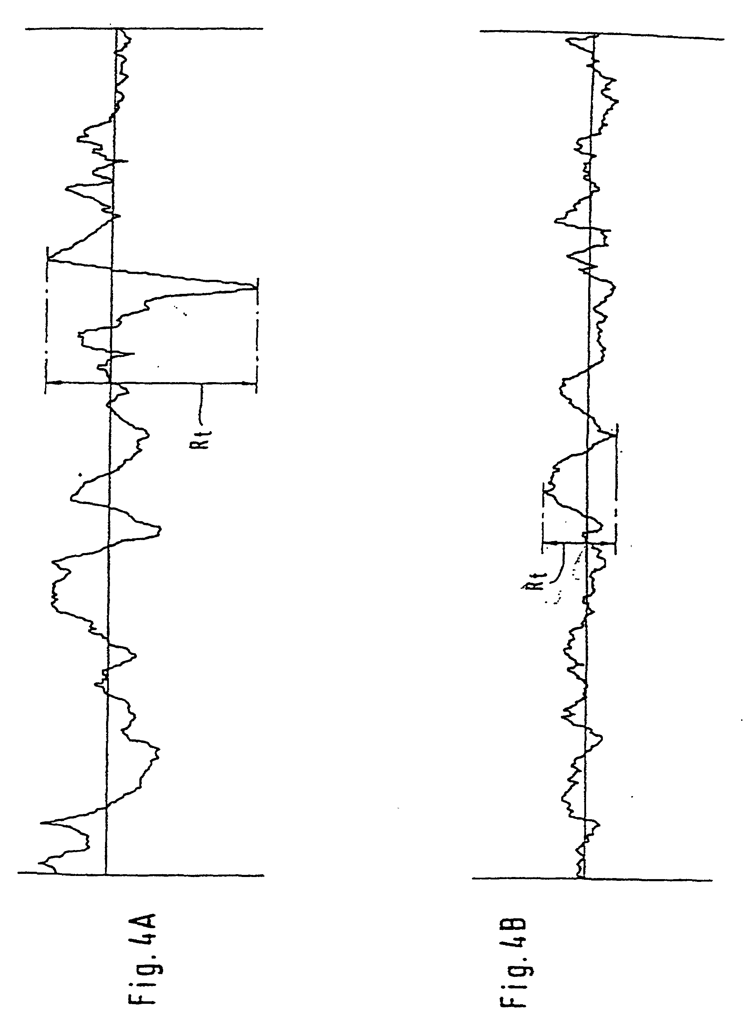

Fig. 4A und 4B stellen die Rauhigkeiten der erzielbaren Bohrungsoberflächen gegenüber. Es wurde jeweils eine Meßstrecke von 0,25 mm ausgewählt.

Fig. 4A zeigt die Rauhigkeit, die sich bei Verwendung eines herkömmlichen Werkzeugs einstellt, während Fig. 4B die Rauhigkeit bei Verwendung eines erfindungsgemäßen Werkzeugs aufzeigt. Gebohrt wurde hier mit dem Werkzeug wie vorstehend angegeben, jedoch in ein Material GG25. Die mittlere Rauheit gemäß Fig. 4A betrug 1.99 µm und die maximale Rauheit 18.8 µm. Demgegenüber liegt bei dem Versuchsergebnis mit dem erfindungsgemäßen Bohrer gemäß Fig. 4B die mittlere Rauheit Ra bei 1.0 µm und die maximale Rauheit bei 8.6 µm.

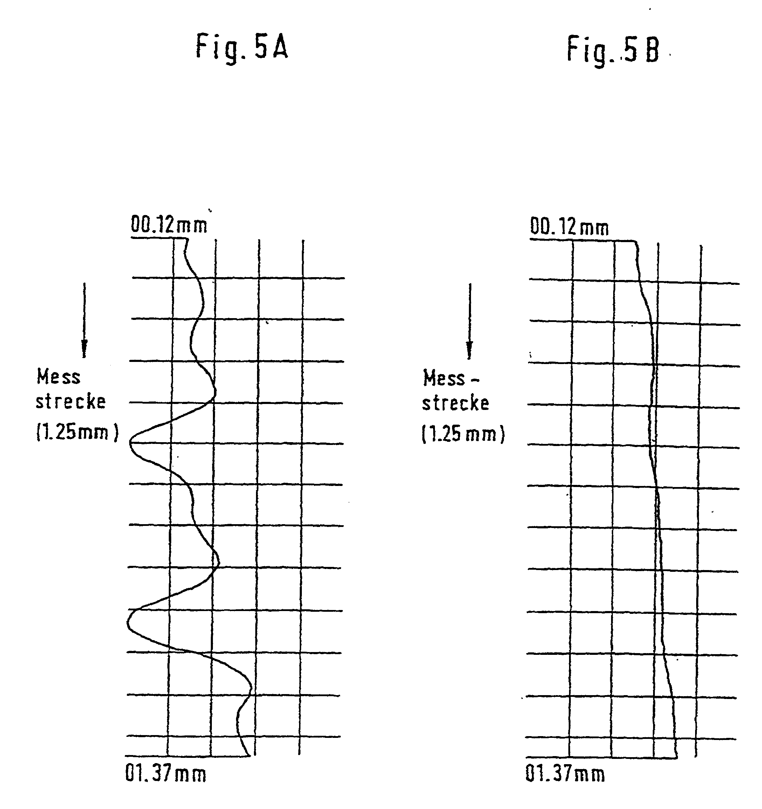

Schließlich ergibt sich bei Verwendung des erfindungsgemäßen Bohrwerkzeugs - wie aus den Figs. 5A und 5B ersichtlich - auch eine bessere Qualität der Bohrung im Makrobereich. Es wurde hierzu die Welligkeit der Bohrsohle gemessen. Fig. 5A zeigt das Meßergebnis bei dem Versuch mit dem herkömmlichen Werkzeug. Man erkennt aus dieser Figur, daß sich eine sehr starke Welligkeit der Bohrsohle einstellt. Demgegenüber läßt sich mit dem erfindungsgemäßen Werkzeug eine sehr glatte Oberfläche der Bohrsohle - wie in Fig. 5B gezeigt - erzielen.

Fig. 6 zeigt eine Ausgestaltung eines Bohrwerkzeugs, bei dem die erfindungsgemäße Orientierung der Nebenschneide 318 zur Ausbildung eines negativen Seitenspanwinkels ausschließlich in einem Spitzenabschnitt 340 vorgesehen ist. Im übrigen Abschnitt des Schneidteils 314 ist der Seitenspanwinkel γ* positiv. Man erkennt aus der Darstellung gemäß Fig. 6A, daß hier der den Bohrer stabilisierende Effekt aufgrund der Zugkraft F_{z} nur im Abschnitt 340 auftritt, so daß sich dieses Werkzeug besonders zum Bohren nicht so tiefer Bohrungen etwa bis zu einem Tiefenbereich von 3 bis 4 x d (Bohrerdurchmesser) eignet. Das Werkzeug gemäß Fig. 6 eignet sich darüber hinaus im besonderem Maße zum Bohren ohne Kühlmittel, wenngleich in Fig. 6A die Mündungsöffnung für einen innenliegenden Kühlkanal mit 322 bezeichnet ist. Selbstverständlich kann auch bei dieser Ausgestaltung des Werkzeugs im Spitzenabschnitt 340 ein Schneideinsatz zur Ausbildung der Haupt- und/oder Nebenschneiden vorgesehen sein.

Selbstverständlich sind Abweichungen von den vorstehend beschriebenen Ausführungsbeispielen möglich, ohne den Grundgedanken der Erfindung zu verlassen. So ist beispielsweise die dynamisch stabilisierende Wirkung des Verlaufs des Seitenspanwinkels auch dann erzielbar, wenn anstelle der Schnittrichtung die Wirkrichtung berücksichtigt wird, die sich aus einer Vektoraddition von Schnittrichtung und Vorschub ergibt. Der Seitenspanwinkel ist in diesem Fall um den Wirkrichtungswinkel (DIN 1412) zu vergrößern. Ferner ist das Werkzeug nicht unbedingt mit einer rotationssymmetrischen Schneidengestaltung auszustatten. Es ist gleichermaßen möglich, die Schwingungsstabilisierung bei einem Einlippen-Tieflochbohrwerkzeug zu erzielen.

Die Erfindung schafft somit ein Bohrwerkzeug, insbesondere ein mehrschneidiges Bohrwerkzeug mit vorzugsweise punktsymmetrischer Schneidenanordnung mit Haupt- und Nebenschneide, die zur Achse des Bohrwerkzeugs geneigt ist. Zur Stabilisierung des Werkzeugs gegen schnittkraftbedingte Schwingungen ist die Nebenschneide über eine überwiegende axiale wirksame Länge in Schnittrichtung geneigt und hat somit einen negativen Seitenspanwinkel (γ*).

## Patentansprüche

1. Bohrwerkzeug, insbesondere mehrschneidiges Bohrwerkzeug mit vorzugsweise punktsymmetrischer Schneidenanordnung mit Haupt- und Nebenschneide, die zur. Achse des Bohrwerkzeugs unter einem Seitenspanwinkel (γ*) geneigt ist, der durch den wendelförmigen Verlauf einer Spannut (116) gebildet ist,
**dadurch gekennzeichnet, daß**
die Nebenschneide (118) über eine überwiegende axiale wirksame Länge in Schnittrichtung geneigt ist und somit einen derart negativen Seitenspanwinkel (γ*) hat, daß die an der Schneide angreifenden dynamischen Kräfte (F_{c}) das Bohrwerkzeug auf Zug beanspruchen.

2. Bohrwerkzeug nach Anspruch 1, **dadurch gekennzeichnet, daß** der Seiteaspanwinkel (γ*) auf den Keilwinkel (κ) der Nebenschneide (118) abgestimmt ist.

3. Bohrwerkzeug nach Anspruch 1 oder 2, **dadurch gekennzeichnet, daß** der Seitenspanwinkel (γ*) im Bereich zwischen -1° und -10°, vorzugsweise zwischen - 2° und - 6° liegt.

4. Bohrwerkzeug nach einem der Ansprüche 1 bis 3, **dadurch gekennzeichnet, daß** die Schneidenanordnung auf einem Schneidteil ausgebildet ist.

5. Bohrwerkzeug nach Anspruch 4, **dadurch gekennzeichnet, daß** das Schneidteil auf einem Trägerteil sitzt, welches aus Stahl, Schnellstahl, Hartmetall, Keramik oder Cermet oder dergleichen besteht.

6. Bohrwerkzeug nach Anspruch 4 oder 5, **dadurch gekennzeichnet, daß** das Schneidteil von einem Schneideinsatz gebildet ist.

7. Bohrwerkzeug nach Anspruch 6, **dadurch gekennzeichnet, daß** der Schneideinsatz lösbar mit dem Trägerteil verbunden, beispielsweise verklemmt ist.

8. Bohrwerkzeug nach Anspruch 6 oder 7, **dadurch gekennzeichnet, daß** der Schneideinsatz von einer einteiligen Platte gebildet ist.

9. Bohrwerkzeug nach einem der Ansprüche 4 bis 8, **dadurch gekennzeichnet, daß** das Schneidteil aus Schnellstahl und/oder Hartmetall und/oder Cermet und/oder Keramik und/oder PKD (Polykristalliner Diamant) und/oder CBN (kubisches Bornitrid) besteht.

10. Bohrwerkzeug nach einem der Ansprüche 1 bis 3, **dadurch gekennzeichnet, daß** die Schneidenanordnung einstückig mit dem Bohrwerkzeug (110) ausgebildet ist.

11. Bohrwerkzeug nach Anspruch 10, **dadurch gekennzeichnet, daß** das Bohrwerkzeug aus Schnellstahl (HSS), Hartmetall, Keramikwerkstoff oder Cermet besteht.

12. Bohrwerkzeug nach einem der Ansprüche 1 bis 11, **dadurch gekennzeichnet, daß** eine der Anzahl der Hauptschneiden entsprechende Anzahl von Spannuten (116) vorgesehen ist.

13. Bohrwerkzeug nach Anspruch 12, **dadurch gekennzeichnet, daß** der Steigungswinkel der Wendel an der Nebenschneide (118) dem negativen Seitenspanwinkel (γ*) entspricht.

14. Bohrwerkzeug nach einem der Ansprüche 1 bis 13, **gekennzeichnet durch** die Ausbildung als Tieflochbohrer.

15. Bohrwerkzeug nach einem der Ansprüche 1 bis 14, **gekennzeichnet durch** ein innenliegendes Kühl- und Schmiermittelkanalsystem mit mindestens einer Austrittsöffnung (122) in der Hauptfreifläche (124).

16. Bohrwerkzeug nach einem der Ansprüche 1 bis 15, **dadurch gekennzeichnet, daß** die Nebenschneide (118) durchgehend in Schnittrichtung angestellt ist.

17. Bohrwerkzeug nach einem der Ansprüche 1 bis 16, **dadurch gekennzeichnet, daß** in der Spannut eine Spanleitstufe ausgebildet ist.

18. Bohrwerkzeug nach einem der Ansprüche 1 bis 17, **gekennzeichnet durch** eine der Nebenschneide nachlaufende weitere Nebenschneide.

19. Bohrwerkzeug nach einem der Ansprüche 1 bis 18, **gekennzeichnet durch** die Ausbildung als drehangetriebenes Werkzeug.

## Claims

1. A drill bit, especially a drill bit with multiple cutting edges with a preferably point-symmetric arrangement of cutting edges with primary and secondary cutting edge, which is inclined relative to the axis of the drill bit at a side rake angle (γ*), which is formed by the helical configuration of a flute (116),
**characterized in that**
the secondary cutting edge (118) is inclined in cutting direction over a substantial axial effective length, and thus has a negative side rake angle (γ*) that the dynamic forces (F_{c}) attacking at the cutting edge generate tensile stresses in the drill bit.

2. A drill bit according to claim 1, **characterized in that** the side rake angle (γ*) is matched to the lip angle (κ) of the secondary cutting edge (118).

3. A drill bit according to claim 1 or 2, **characterized in that** the side rake angle (γ*) is in the range between -1° and -10°, preferably between -2° and -6°.

4. A drill bit according to one of claims 1 to 3, **characterized in that** the arrangement of cutting edges is formed on a cutting part.

5. A drill bit according to claim 4, **characterized in that** the cutting part is seated on a support part which is made of steel, high-speed steel, carbide, ceramic or cermet or the like.

6. A drill bit according to claim 4 or 5, **characterized in that** the cutting part is formed by a cutting insert.

7. A drill bit according to claim 6, **characterized in that** the cutting insert is joined detachably, for example by clamps, to the support part.

8. A drill bit according to claim 6 or 7, **characterized in that** the cutting insert is formed by a one-piece tip.

9. A drill bit according to one of claims 4 to 8, **characterized in that** the cutting part is made of high-speed steel and/or carbide and/or cermet and/or ceramic and/or PCD (polycrystalline diamond) and/or CBN (cubic boron nitride).

10. A drill bit according to one of claims 1 to 3, **characterized in that** the arrangement of cutting edges is formed in one piece with the drill bit (110).

11. A drill bit according to claim 10, **characterized in that** the drill bit is made of high-speed steel (HSS), carbide, ceramic material or cermet.

12. A drill bit according to one of claims 1 to 11, **characterized in that** a number of flutes (116) corresponding to the number of primary cutting edges is provided.

13. A drill bit according to claim 12, **characterized in that** the pitch angle of the helix on the secondary cutting edge (118) corresponds to the negative side rake angle (γ*).

14. A drill bit according to one of claims 1 to 13, **characterized in that** it is formed as a deep-hole drill.

15. A drill bit according to one of claims 1 to 14, **characterized by** an internal coolant and lubricant duct system with at least one outlet opening (122) in the primary flank (124).

16. A drill bit according to one of claims 1 to 15, **characterized in that** the entire secondary cutting edge (118) is angled in cutting direction.

17. A drill bit according to one of claims 1 to 16, **characterized in that** chip-guide stage is formed in the flute.

18. A drill bit according to one of claims 1 to 17, **characterized by** a further secondary cutting edge following the secondary cutting edge.

19. A drill bit according to one of claims 1 to 18, **characterized in that** it is formed as a rotary bit.

## Revendications

1. Outil de perçage, en particulier outil de perçage à plusieurs tranchants avec de préférence un dispositif de coupe à symétrie ponctuelle avec un tranchant principal et secondaire, qui est incliné par rapport à l'axe du dispositif de perçage selon un angle de coupe latéral ( γ*) formé par le tracé hélicoïdal d'une gorge de coupe (116),
**caractérisé en ce que**,
le tranchant secondaire (118) est incliné sur une longueur efficace principalement axiale dans la direction de coupe et présente par conséquent un angle de coupe latéral ( γ*) négatif tel que les forces dynamiques (Fc) appliquées sur le tranchant sollicitent l'outil de perçage en traction.

2. Outil de perçage selon la revendication 1, **caractérisé en ce que** l'angle de coupe latéral (γ*) est ajusté à l'angle du taillant (χ) du tranchant secondaire (118).

3. Outil de perçage selon la revendication 1 ou 2, **caractérisé en ce que** l'angle de coupe latéral (γ*) se situe dans la plage entre -1° et -10°, de préférence entre -2° et -6°.

4. Outil de perçage selon l'une des revendications 1 à 3, **caractérisé en ce que** le dispositif de coupe est formé sur une partie de coupe.

5. Outil de perçage selon la revendication 4, **caractérisé en ce que** la partie de coupe repose sur une partie porteuse qui est en acier, acier rapide, métal dur, céramique ou cermet ou analogue.

6. Outil de perçage selon la revendication 4 ou 5, **caractérisé en ce que** la partie de coupe est formée par un insert de taille.

7. Outil de perçage selon la revendication 6, **caractérisé en ce que** l'insert de taille est raccordé avec la partie porteuse de façon amovible, par exemple par blocage.

8. Outil de perçage selon la revendication 6 ou 7, **caractérisé en ce que** l'insert de taille est formé par une plaquette d'un seul tenant.

9. Outil de perçage selon l'une des revendication 4 à 8, **caractérisé en ce que** la partie de coupe est en acier rapide et/ou métal dur et/ou cermet et/ou céramique et/ou PKD (diamant polycristallin) et/ou CBN (nitrure de bore cubique).

10. Outil de perçage selon l'une des revendications 1 à 3, **caractérisé en ce que** le dispositif de coupe est conçu d'un seul tenant avec l'outil de perçage (110).

11. Outil de perçage selon la revendication 10, **caractérisé en ce que** l'outil de perçage est en acier rapide (HSS), métal dur, matière céramique ou cermet.

12. Outil de perçage selon l'une des revendications 1 à 11, **caractérisé en ce qu'**il est prévu un nombre de gorges de coupe (116) correspondant au nombre de tranchants principaux.

13. Outil de perçage selon la revendication 12, **caractérisé en ce que** l'angle d'inclinaison de l'hélice sur le tranchant secondaire (118) correspond à l'angle de coupe latérale négatif (γ*).

14. Outil de perçage selon l'une des revendications 1 à 13, **caractérisé par** la formation de forets pour trous profonds.

15. Outil de perçage selon l'une des revendications 1 à 14, **caractérisé par** un système de canaux internes d'agent de refroidissement et d'agent de lubrification avec au moins une ouverture de sortie (122) dans la face libre principale (124).

16. Outil de perçage selon l'une des revendications 1 à 15, **caractérisé en ce que** le tranchant secondaire (118) s'étend en continu dans la direction de coupe.

17. Outil de perçage selon l'une des revendications 1 à 16, **caractérisé en ce qu'**un gradin de guidage de coupe est formé dans la gorge de coupe.

18. Outil de perçage selon l'une des revendications 1 à 17, **caractérisé par** un tranchant secondaire supplémentaire en amont du premier tranchant secondaire.

19. Outil de perçage selon l'une des revendications 1 à 18, **caractérisé par** la formation d'un outil entraîné en rotation.
